# EUROPEAN PATENT APPLICATION

(11) **EP 1 521 244 A1**
(43) Date of publication of application: **06.04.2005**
(21) Application number: 04017015.1
(22) Date of filing: 19.07.2004
(51) Int. Cl.: G11B 5/39, G11B 5/31

(54) **Method for making a read sensor for a magnetic head**

(30) Priority: 30.09.2003 US 675697
(71) Applicant: Hitachi Global Storage Technologies B. V., 01 AZ Amsterdam (NL)
(72) Inventor: Bear, Amanda, Campbell, CA 95008 (US)
(74) Representative: Kirschner, Klaus Dieter, Dipl.-Phys.

(57) **Abstract**

A method of making a read sensor which defines its stripe height before its trackwidth using photoresist layers formed without undercuts is disclosed. The photoresist layers are removed using chemical-mechanical polishing (CMP) lift-off techniques instead of using conventional solvents. In particular, a first photoresist layer is formed in a central region over a plurality of read sensor layers. End portions of the read sensor layers around the first photoresist layer are removed by ion milling to define the stripe height for the read sensor. Next, insulator layers are deposited where the end portions of the read sensor layers were removed. The first photoresist layer is then removed through mechanical interaction with a CMP pad. In subsequently defining the trackwidth for the read sensor, a second photoresist layer is formed in a central region over the remaining read sensor layers. End portions of the read sensor layers around the second photoresist layer are then removed by ion milling to define the trackwidth for the read sensor. Next, hard bias and lead layers are deposited where the end portions of the read sensor layers were removed. The second photoresist layer is then removed through mechanical interaction with the CMP pad. Preferably, protective layers (e.g. carbon) between the photoresist layers and the read sensor layers are formed prior to photoresist removal. Thus, problems including those inherent with use of photoresist structures having undercuts are eliminated.

## Description

This present invention relates generally to methods of making a read sensor for a magnetic head.

A magnetic read/write head carried on a slider is used to read data from or write data to tracks on a magnetic disk. Such sliders, as well as the magnetic heads, are typically produced using thin-film deposition techniques. In particular, the several material layers which make up a read sensor for the magnetic head are typically formed by sputter-depositing a full film layer of the required material on a wafer substrate, forming a patterned photoresist structure over the layer, ion milling away the exposed portion of the photoresist structure, and then removing the patterned photoresist structure.

This technique has been specifically tailored using a "bilayer lift-off mask" for the photoresist structure. A bilayer lift-off mask has a cross-sectional T-shape wherein the vertical portion of the "T" is short and wide, but less wide than the horizontal top portion of the T. The top portion of the T is generally a patterned photoresist layer and the bottom vertical portion of the T is a release layer (or "underlayer") typically made of polydimethylglutarimide (PMGI). This configuration provides left and right "undercuts" (as seen in cross-section), wherein each undercut has a height and a length below the top photoresist portion.

Conventional processes typically define a trackwidth for the read sensor prior to defining its stripe height using bilayer lift-off masks formed with undercuts. In particular, read sensor layers are sputter-deposited in full film on the wafer substrate and the bilayer lift-off mask is subsequently formed over it to cover a read sensor site. With the bilayer lift-off mask in place, ion milling is employed to remove all of the read sensor material except that below the mask, to thereby define the trackwidth for the read sensor. Full films of hard bias and lead layer materials are then sputter-deposited to cover the top of and end regions which surround the bilayer lift-off mask. To remove the bilayer lift-off mask, a stripper is introduced to dissolve the bottom release layer. This causes the bilayer lift-off mask and the hard bias and lead materials deposited thereon to be released from the wafer substrate. Subsequently, this process is repeated to define the stripe height for the read sensor in a similar fashion.

Unfortunately, processing control of the length and height of the undercuts of the bilayer lift-off mask becomes difficult for defining very narrow trackwidths. If the undercuts are too long, this leaves insufficient release layer material which causes the bilayer lift-off mask to be too easily separated from the substrate or to topple over during subsequent processes. If the undercut is too short, "fencing" may occur which is the deposition of sputtered material across the height of the undercut that remains after the photoresist is removed. Fences can undesirably lead to an electrical short between the read sensor and a shield of the magnetic head.

Conventionally, when the stripe height is defined by ion milling after trackwidth definition process, the ion milling for the stripe height definition process removes some lead material which may be redeposited on top of the read sensor to cause the shunting of electrical current. Also, the electrical resistance of the leads undesirably increases from the ion milling removal of lead material. Additional problems may occur when using a conventional lift-off process and defining the stripe height before the track width. When insulator materials are deposited over and around the bilayer lift-off mask, some of the materials may remain over the read sensor beneath the undercuts. When this occurs, a subsequent ion milling step for defining the trackwidth will be incomplete and the trackwidth will not be well-defined. Also because of this issue, an insulator gap that is formed between the sensor and the shield will ultimately be thicker than desired. Finally, solvents utilized in forming photoresists for trackwidth definition undesirably etch the underlying insulator materials which increases the possibility of electrical shorting.

Accordingly, there is a strong-felt need for a method of forming a read sensor with a very narrow track width which overcomes the deficiencies of the prior art.

This object is achieved by the method of claim 1. Advantageous embodiments of the invention are characterized in the sub-claims. More particularly, the advantageous embodiments of the invention provides methods which involve an initial process of defining a stripe height for a read sensor with use of a first photoresist layer without undercuts which is removed by a chemical-mechanical polishing (CMP) lift-off technique, and a subsequent process of defining a trackwidth for the read sensor with use of a second photoresist layer without undercuts which is also removed by the CMP lift-off technique.

What is described herein is a method of making a read sensor for a magnetic head which defines its stripe height before its trackwidth. This method is performed with use of photoresist layers formed without undercuts which are removed using chemical-mechanical polishing (CMP) lift-off processes. Thus, the problems inherent in the use of photoresist structures having undercuts are eliminated.

In defining the stripe height for the read sensor, a first photoresist layer is formed in a central region over a plurality of read sensor layers; end portions of the read sensor layers around the first photoresist layer are removed by etching to define the stripe height; insulator layers are deposited where the end portions of the read sensor layers were removed; and the first photoresist layer is removed through mechanical interaction with a CMP pad. In subsequently defining the trackwidth for the read sensor, a second photoresist layer is formed in a central region over the read sensor layers; end portions of the read sensor layers around the second photoresist layer are removed by etching to define the trackwidth; hard bias and lead layers are deposited where the end portions of the read sensor layers were removed; and the second photoresist layer is removed through mechanical interaction with the CMP pad. Preferably, protective layers (e.g. carbon layers) are formed underneath the photoresist layers prior to their removal.

Advantageously, by defining the stripe height before the trackwidth in this manner, the location of the zero stripe height of the magnetic head can be more precisely defined. Lead material is not removed by ion milling during the stripe height definition process and therefore the possibility of shunting electrical current is eliminated and no increase in lead resistance is produced. Finally, the use of protective layers underneath the photoresist prevents electrical shorting which may occur during the stripe height definition as a first process. These protective layers act as a barrier to photoresist developers which would otherwise inadvertently etch wanted materials (e.g. insulator materials).

Other objects and advantages of the invention will become more apparent to those skilled in the art after considering the following detailed description in connection with the accompanying drawings.
FIG. 1 is a flowchart for use in describing a method of making a read sensor of a magnetic head, and in particular for defining a stripe height of the read sensor prior to defining its trackwidth;
FIG. 2 is a continuation of the flowchart of FIG. 2 for the method of making the read sensor, and in particular for defining the trackwidth of the read sensor after defining its stripe height;
FIG. 3 is a first one of several cross-sectional views of FIGs. 3-22 for describing the method of making a read sensor of a magnetic head, which particularly shows the formation of a plurality of read sensor layers over insulator and shield layers;
FIG. 4 is the same as that shown in FIG. 3, except that a protective layer (e.g. carbon) is formed over the read sensor layers;
FIG. 5 is the same as that shown in FIG. 4, except that a photoresist layer without undercuts is formed over the protective layer in a central region;
FIG. 6 is the same as that shown in FIG. 5, except that the protective layer is removed in end regions which surround the photoresist layer by reactive ion etching (RIE);
FIG. 7 is the same as that shown in FIG. 6, except that the read sensor layers are removed in the end regions by ion milling;
FIG. 8 is the same as that shown in FIG. 7, except that an insulator layer is deposited in the end regions;
FIG. 9 is the same as that shown in FIG. 8, except that a protective layer (e.g. carbon) is formed in the end regions;
FIG. 10 is the same as that shown in FIG. 9, except that the photoresist layer is removed with use of a chemical-mechanical polishing (CMP) lift-off technique;
FIG. 11 is the same as that shown in FIG. 10, except that the remaining protective layer is removed by RIE - the stripe height definition process being completed;
FIG. 12 is the same as that shown in FIG. 11, except that a protective layer (e.g. carbon) is formed over the read sensor layers;
FIG. 13 is the same as that shown in FIG. 12, except that a photoresist layer without undercuts is formed over the protective layer in the central region;
FIG. 14 is the same as that shown in FIG. 13, except that the protective layer is removed in end regions which surround the photoresist layer by RIE;
FIG. 15 is the same as that shown in FIG. 14, except that the read sensor layers are removed in the end regions by ion milling;
FIG. 16 is the same as that shown in FIG. 15, except that hard bias layers are formed in the end regions;
FIG. 17 is the same as that shown in FIG. 16, except that lead layers are formed over the hard bias layers in the end regions;
FIG. 18 is the same as that shown in FIG. 17, except that a protective layer is formed over the lead layers in the end regions;
FIG. 19 is the same as that shown in FIG. 18, except that the photoresist layer is removed with use of the CMP lift-off technique;
FIG. 20 is the same as that shown in FIG. 19, except that the remaining protective layer is removed - the trackwidth definition process being completed;
FIG. 21 is a simplified top down view of the resulting read sensor;
FIG. 22 is a cross-sectional view of a conventional step in a method of forming a read sensor which uses a bilayer lift-off mask formed with undercuts; and
FIG. 23 is an illustration of a data storage device (e.g. a disk drive) which may utilize a magnetic head which contains the read sensor.

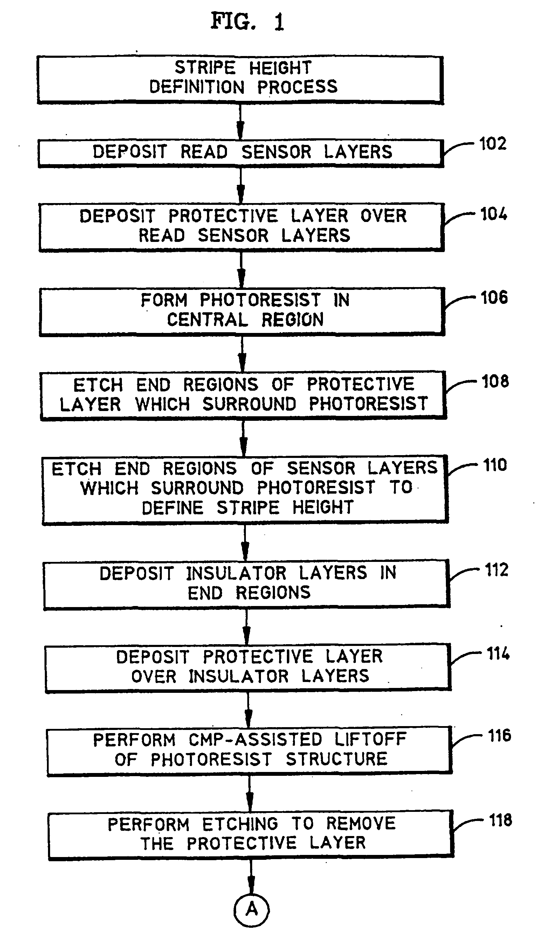

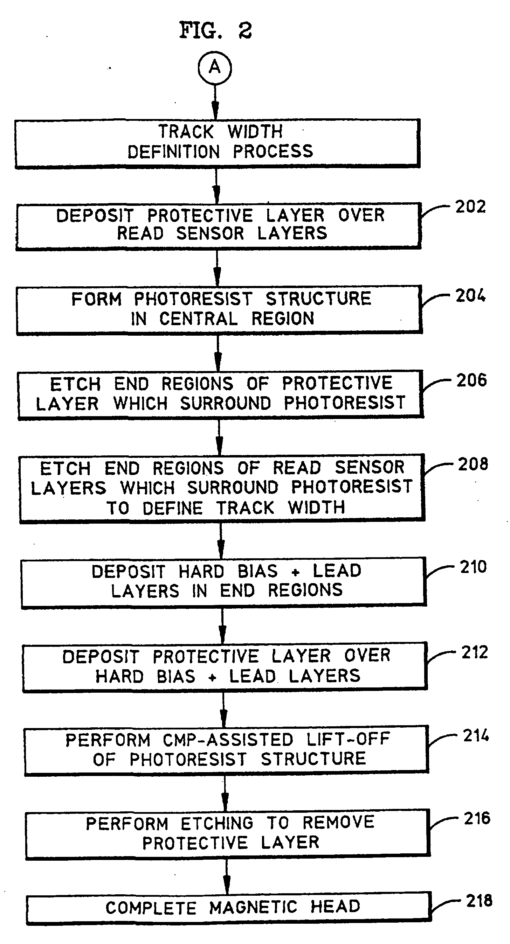

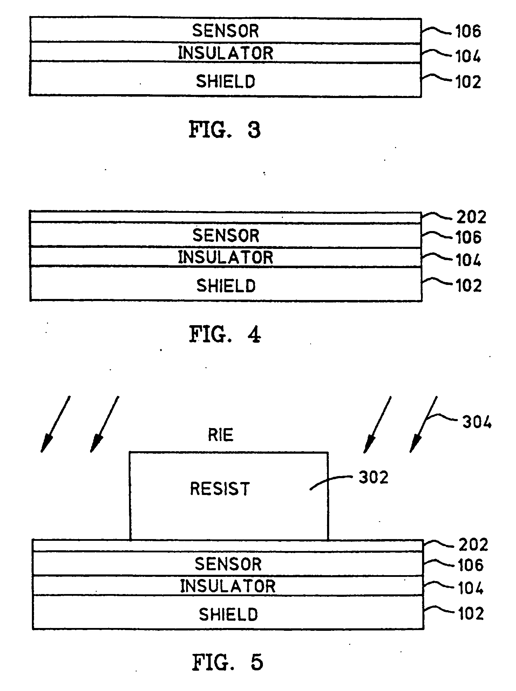

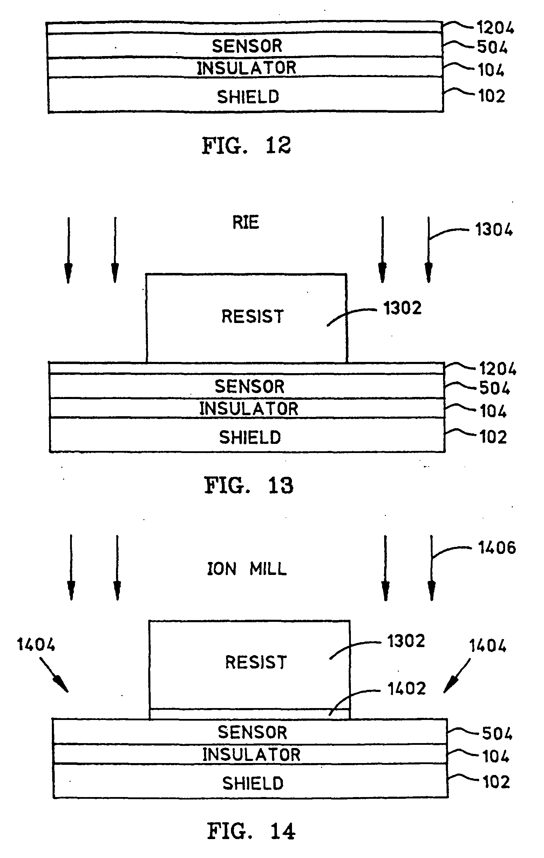

FIGs. 1 and 2 are flowcharts which describe a specific method of making a read sensor of a magnetic head using inventive techniques. The flowcharts of FIGs. 1 and 2 outline steps which correspond to the cross-sectional views of partial read sensor structures of FIGs. 3-22. In particular, the flowchart of FIG. 1 and corresponding FIGs. 3-11 relate to the stripe height definition of the read sensor. The flowchart of FIG. 2 and corresponding FIGs. 12-22 relate to the subsequent trackwidth definition of the read sensor.

Referring now to the flowchart of FIG. 1 in combination with the cross-sectional views of FIGs. 3-11, what will now be described in detail is the stripe height definition process for the read sensor. Beginning with FIGs. 1 and 3 in combination, a plurality of read sensor layers 106 are deposited over an insulator layer 104 (step 102 of FIG. 1). Read sensor layers 106 include a plurality of well-known material layers which make up a magnetoresistive (MR) or giant MR (GMR) sensor. Insulator layer 104 is itself formed over a shield layer 102, which may be one of two shield layers of the magnetic head. Insulator layer 104 may be any suitable dielectric material, such as alumina (Al₂O₃) or SiO₂.

Next in FIG. 4, a protective layer 202 is deposited over the read sensor layers 106 (step 104 of FIG. 1). Protective layer 202 may be formed to a thickness between about 100 - 200 Angstroms. Protective layer 202 may be any suitable material, such as carbon. This carbon may be sputtered carbon, diamond-like carbon (DLC), or cathodic arc, as examples. Preferably, the hardness of the carbon is about 22 GPa.

Next in FIG. 5, a photoresist layer 302 is formed over protective layer 202 in a central region (step 106 of FIG. 1). This photoresist layer 302 is formed so as to define a stripe height for the read sensor. Photoresist layer 302, which may be made of a polyphenolic polymer or polyvinylphenol, may be spun on top of protective layer 202. A polyphenolic polymer is a copolymer of phenol and formaldehyde, and is also known commercially as Novolak which can be purchased from Hoechst Celanese, Sumitomo, or Shipley. Preferably, photoresist layer 302 is formed of a single layer which does not include a bottom release layer and/or undercuts. Such a photoresist layer 302 may be formed to a thickness within the range of about 150 - 600 nanometers (nm).

To form photoresist layer 302 of FIG. 5, a full thin film of photoresist is formed over protective layer 202 and is light-exposed in regions which are to be removed, provided the photoresist is a positive photoresist. If the photoresist is a negative photoresist, it is light exposed in the regions that are to be retained. Next, the photoresist is subjected to a basic developer solution. The developer used may be, for example, aqueous potassium hydroxide (KOH) developer, such as 1:6 2401 (Shipley) or 1:4 AZ 400 K (Hoechst Celanese) wherein the ratios are the developer to water. In a 1:6 2401 developer, the develop time can be up to 3 minutes for the purpose of removing light-exposed photoresist portions. Other basic aqueous developers may be utilized as well, such as 2.38% tetramethylammonium hydroxide (TMAH).

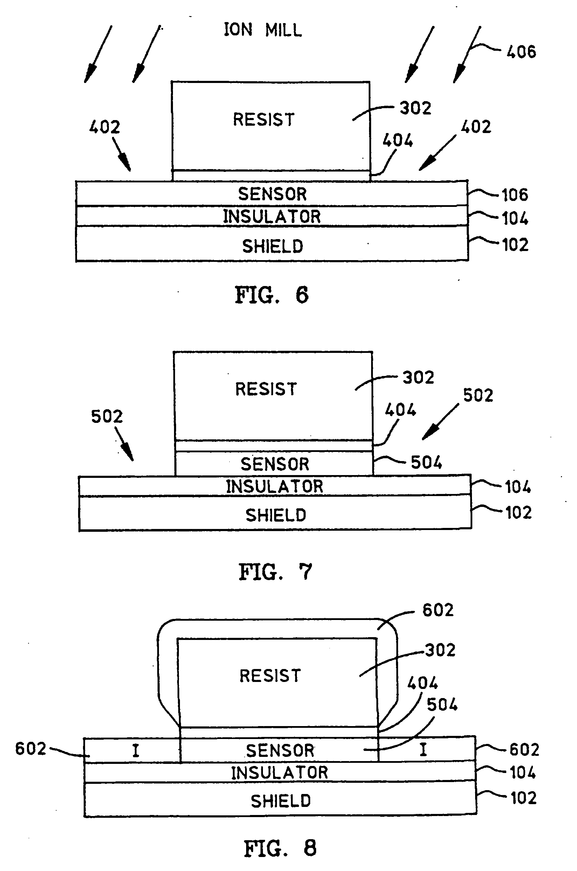

After photoresist layer 302 is formed in FIG. 5, an etching process 304 is utilized to remove protective layer 202 in end regions which surround photoresist layer 302 (step 108 of FIG. 1). If carbon is used as protective layer 302, then a reactive ion etching (RIE) may be utilized to remove the protective layer materials in the end regions. The RIE may be performed using any suitable etch gas, such as one containing carbon-dioxide (CO₂) or oxygen (O₂). As shown in the resulting structure of FIG. 6, top surfaces 402 of read sensor layers 106 are thereby exposed in the end regions.

Subsequently, an additional etching process 406 is utilized to remove read sensor layers 106 in the end regions which surround photoresist layer 302 (step 110 of FIG. 1). This etching process 406 defines the stripe height for the read sensor. Etching process 406 may be any suitable etching process, such as an ion milling. As shown in the resulting structure of FIG. 7, top surfaces 502 of insulator layer 104 are thereby exposed in the end regions.

In FIG. 8, it is shown that insulator layers 602 are then deposited in the end regions where the read sensor materials were removed (step 112 of FIG. 1). During this step, insulator materials are formed over the top and sides of photoresist layer 302 as well. Insulator layers 602 may be any suitable dielectric material, such as alumina (Al₂O₃), silicon-dioxide (SiO₂), or tantalum-oxide (TaO₂). Insulator layers 602 are deposited with a thickness such that the top of insulator layers 602 are substantially level and flush with the top of read sensor layers 504. To achieve this, the insulator material deposition may be suitably controlled in time or an end point detection technique may be utilized.

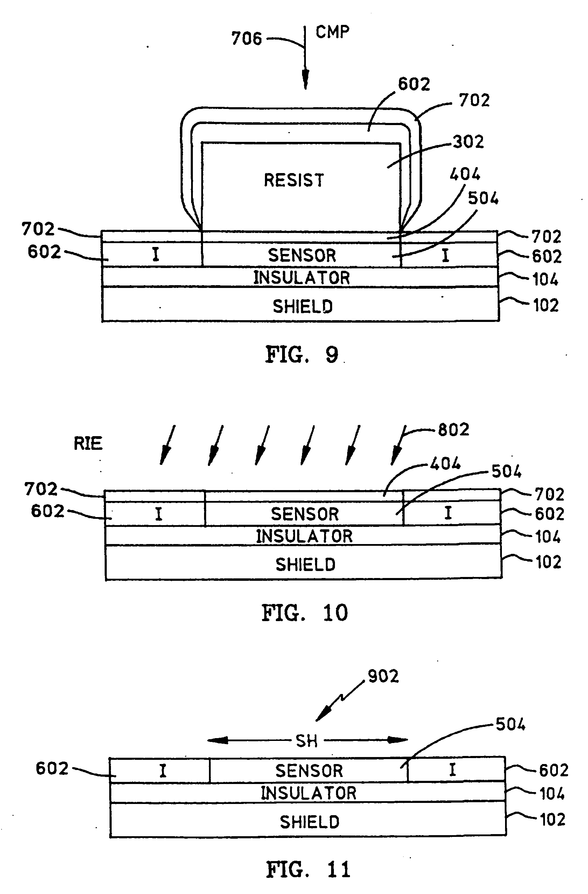

Next in FIG. 9, protective layers 702 are deposited in the end regions over insulator layers 602 (step 114 of FIG. 1). During this step, protective materials are formed over the top and sides of photoresist layer 302 as well. Protective layers 702 are deposited with a thickness of about 100 - 200 Angstroms. Protective layers 702 may be any suitable material, such as carbon. This carbon may be sputtered carbon, diamond-like carbon (DLC), or cathodic arc, as examples. Preferably, the hardness of the carbon is about 22 GPa.

Next, a chemical-mechanical polishing (CMP) lift-off process 706 is utilized to remove photoresist layer 302 (step 116 of FIG. 1). In general, the mechanical interaction of a CMP pad during the CMP process removes the photoresist layer 302 from the remaining layers underneath it. In particular, the CMP pad makes physical contact with the photoresist structure (i.e. photoresist layer 302 having the insulator and protective material formed thereon) and compresses it until the CMP pad reaches the top surface of protective layers 404 and 702. Protective layers 404 and 702 help provide a physical barrier to protect read sensor layers 504 and insulator layers 602 from the CMP lift-off process 706. The CMP lift-off process 706 may persist to remove only a very thin layer of protective layers 404 and 702. The resulting structure, after performing the CMP lift-off process 706, is shown in FIG. 10.

In FIG. 10, an etching process 802 is then utilized to remove protective layers 404 and 702 from the remaining structure (step 118 of FIG. 1). If carbon is used as protective layers 404 and 702, then a RIE may be utilized to remove the protective layer materials. The RIE may be performed using any suitable etch gas, such as one containing carbon-dioxide (CO₂) or oxygen (O₂). The resulting structure of FIG. 11 shows that a stripe height 902 ("SH") from the read sensor is defined. The flowchart of FIG. 1 ends with connector "A".

What will now be described is the trackwidth definition process from the flowchart of FIG. 2 in combination with the cross-sectional views of FIGs. 12-22. This trackwidth definition process follows the stripe height definition process previously described in relation to FIG. 1 and FIGs. 3-11. As will become apparent, the trackwidth definition process is substantially the same as the stripe height definition process except that hard bias and lead layers are deposited in the end regions.

Beginning with FIGs. 2 and 12 in combination (from connector "A" of FIG. 2), a protective layer 1204 is deposited over remaining read sensor layers 504 (step 202 of FIG. 2). Protective layer 1204 may be deposited to a thickness between about 50 - 100 Angstroms. Protective layer 1204 may be any suitable material, such as carbon. This carbon may be sputtered carbon, diamond-like carbon (DLC), or cathodic arc, as examples. Preferably, the hardness of the carbon is about 22 GPa.

In FIG. 13, a photoresist layer 1302 is formed over protective layer 1204 in a central region (step 204 of FIG. 2). This photoresist layer 1302 is formed so as to define a trackwidth for the read sensor. Photoresist layer 1302, which may made of a polyphenolic polymer or polyvinylphenol, may be spun on top of protective layer 1204. Preferably, photoresist layer 1302 is formed of a single layer which does not include a bottom release layer and/or undercuts. Such a photoresist layer 1302 may be formed to a thickness within the range of about 150 - 600 nanometers (nm).

After photoresist layer 1302 is formed in FIG. 13, an etching process 1304 is utilized to remove protective layer 1204 in end regions which surround photoresist layer 1302 (step 206 of FIG. 2). If carbon is used as protective layer 1204, then a reactive ion etching (RIE) may be utilized to removed the protective layer materials in the end regions. The RIE may be performed using any suitable etch gas, such as one containing carbon-dioxide (CO₂) or oxygen (O₂). As shown in the resulting structure of FIG. 14, top surfaces 1404 of read sensor layers 504 are thereby exposed in the end regions.

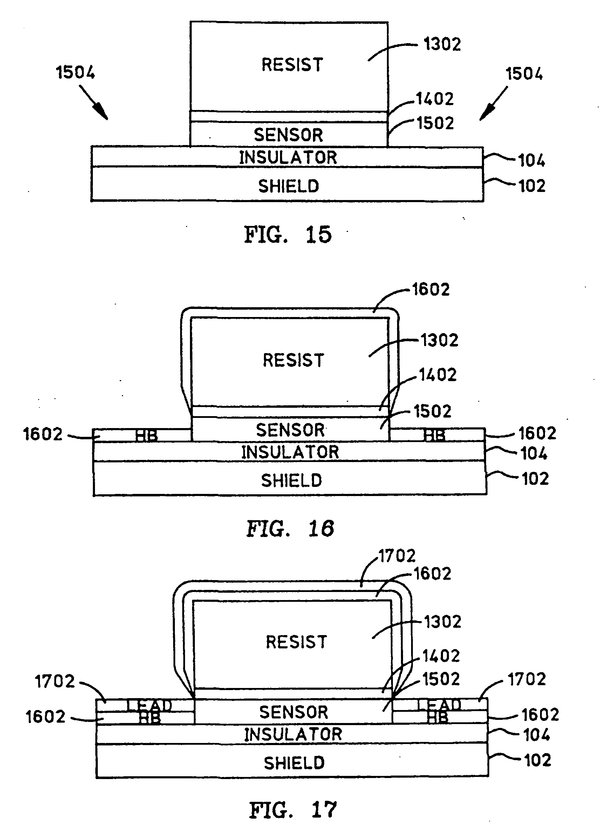

Subsequently, an additional etching process 1406 is utilized to remove read sensor layers 504 in the end regions which surround photoresist layer 1302 (step 208 of FIG. 2). Etching process 1406 may be any suitable etching process, such as an ion milling. As shown in the resulting structure of FIG. 15, this etching process defines the trackwidth for a newly formed read sensor 1502. Top surfaces 1504 of insulator layer 104 are thereby exposed in the end regions.

In FIG. 16, hard bias layers 1602 are deposited in the end regions surrounding read sensor 1502 (step 210 of FIG. 2). During this step, hard bias materials are formed over the top and sides of photoresist layer 1302 as well. Hard bias layers 1602 may be any suitable hard magnet material, such as cobalt-platinum-chromium or other cobalt-based alloy. Next in FIG. 17, lead layers 1702 are deposited in the end regions over hard bias layers 1602 (step 210 of FIG. 2). During this step, lead materials are formed over the top and sides of photoresist layer 1302 as well. Leads layers 1702 provide electrical connections for the flow of a sensing current Iₛ from a current source to read sensor 1502. Lead layers 1702 may be any suitable conductive material, such as rhodium (Rh), tantalum (Ta), or gold (Au). As shown, hard bias and lead layers 1602 and 1702 are deposited with a thickness such that the top of lead layers 1602 are substantially level and flush with the top of read sensor 1502.

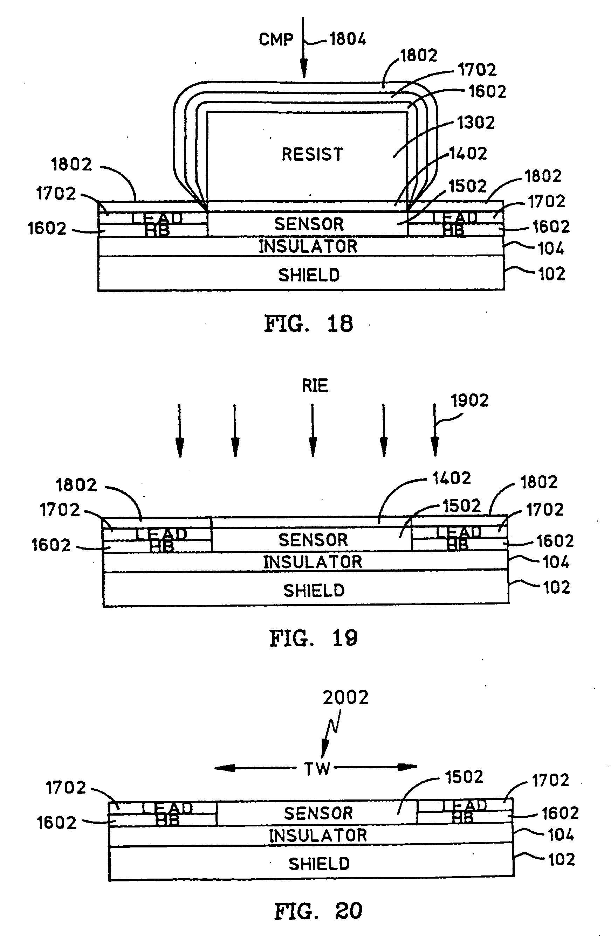

In FIG. 18, protective layers 1802 are then deposited in the end regions over lead layers 1702 (step 212 of FIG. 2). During this step, protective materials are formed over the top and sides of photoresist layer 1302 as well. Protective layer 1204 may be deposited to a thickness between about 50 - 100 Angstroms. Protective layers 1802 may be any suitable material, such as carbon. This carbon may be sputtered carbon, diamond-like carbon (DLC), or cathodic arc, as examples. Preferably, the hardness of the carbon is about 22 GPa.

Next, a chemical-mechanical polishing (CMP) lift-off process 1804 is utilized to remove photoresist layer 1302 (step 214 of FIG. 2). Preferably, this CMP lift-off process 1804 is the same process as CMP lift-off process 706 of FIG. 9 and step 116 of FIG. 1. In general, the mechanical interaction of a CMP pad during the CMP lift-off process removes the photoresist layer 1302 from the remaining layers underneath it. In particular, the CMP pad makes physical contact with the photoresist structure (i.e. photoresist layer 1302 having hard bias, lead, and protective material formed thereon) and compresses it until the CMP pad reaches the top surface of protective layer 1402. Protective layers 1402 and 1802 help provide a physical barrier to protect read sensor layers 504 and insulator layers 602 from CMP lift-off process 706. CMP lift-off process 1804 may persist to remove only a very thin layer of protective layers 1402 and 1802. The resulting structure, after performing the CMP lift-off process 1804, is shown in FIG. 19.

Optionally, just prior to the CMP lift-off step 214 of FIG. 2, the photoresist may be exposed to a solvent (e.g. N-Methyl-2-Pyrrolidone or NMP) as in a conventional lift-off process. This helps to remove any fences which may have formed along a trackwidth edge of the read sensor.

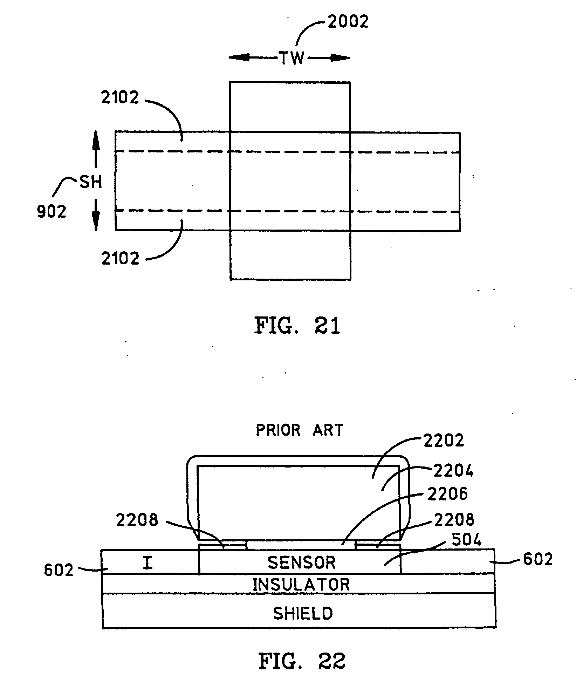

After the CMP from step 214, an etching process 1902 of FIG. 19 is utilized to remove protective layers 1402 and 1802 from the remaining structure (step 216 of FIG. 2). If carbon is used as protective layers 1402 and 1802, then a RIE may be utilized to remove the protective layer materials. The resulting structure of FIG. 20 shows that a trackwidth 2002 ("TW") for the read sensor 1502 is defined. FIG. 21 shows a simplified top down view of the stripe height 902 and trackwidth 2002 for the read sensor.

Thus, what has been described is a method of making a read sensor for a magnetic head which defines its stripe height before its trackwidth. The method is performed with use of photoresist layers, formed without undercuts, which are removed with use of chemical-mechanical polishing (CMP) processes. Thus, the problems inherent in conventional methods are eliminated. By defining the stripe height before the trackwidth in this unique manner, the location of the zero stripe height can be more precisely defined. Using the CMP lift-off technique, edges of the read sensor are formed with sharper, steeper walls as compared to those formed using a conventional lift-off process. Lead material is not removed by ion milling during the stripe height definition process and therefore the possibility of shunting electrical current is eliminated and no increase in lead resistance is produced. Finally, the possibility of electrical shorting due to the inadvertent etching of insulator materials by the photoresist developer when the stripe height is defined first is eliminated with the use of protective layers.

One trackwidth definition problem of the prior art is described in more detail in relation to FIG. 22. In FIG. 22, a conventional bilayer lift-off mask 2202 having a top photoresist layer 2204 and a bottom release layer 2206 (described in the Background of the Invention section) is shown. As depicted, the bilayer lift-off mask 2202 is formed with a "T" shape having undercuts. After insulator materials 602 are deposited over such a structure using the conventional technique, some insulator materials 2208 are undesirably formed over read sensor materials 504 in the undercut regions. These insulator materials 2208 remain even after bilayer lift-off mask 2202 is removed. Referring back to FIG. 21, regions 2102 which would be undesirably covered with insulator materials using the bilayer lift-off mask technique is shown, resulting in an imprecise trackwidth definition. The present invention eliminates this possibility with use of photoresist layers formed without undercuts.

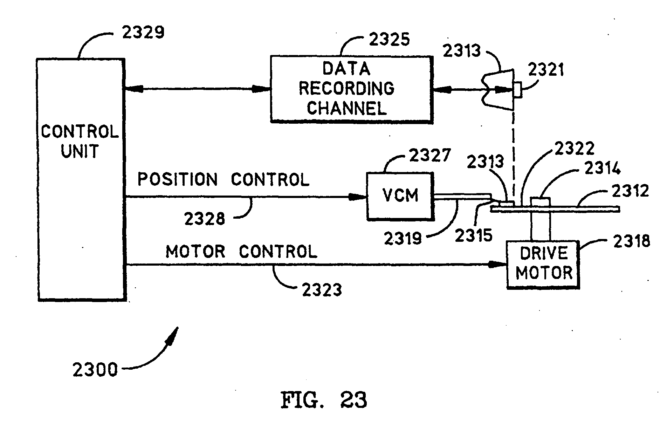

To complete the discussion, FIG. 23 illustrates a data storage device 2300 (e.g. a disk drive) which may employ a magnetic head 2321 containing the fabricated read sensor of the present invention. In FIG. 23, at least one rotatable magnetic disk 2312 is supported on a spindle 2314 and rotated by a disk drive motor 2318. The magnetic recording media on each disk is in the form of an annular pattern of concentric data tracks (not shown) on disk 2312. At least one slider 2313 is positioned on the disk 2312, each slider 2313 supporting a magnetic read/write head 2321 which incorporates the read sensor. As the disks rotate, slider 2313 is moved radially in and out over disk surface 2322 so that head 2321 may access different portions of the disk where desired data is recorded. Each slider 2313 is attached to an actuator arm 2319 by means of a suspension 2315. Suspension 2315 provides a slight spring force which biases slider 2313 against the disk surface 2322. Each actuator arm 2319 is attached to an actuator means 2327. Actuator means 2327 of FIG. 23 may be a voice coil motor (VCM). The VCM comprises a coil movable within a fixed magnetic field, the direction and speed of the coil movements being controlled by the motor current signals supplied by controller 2329.

During operation of the disk storage system, the rotation of disk 2312 generates an air bearing between slider 2313 (the surface of slider 2313 which includes head 2321 and faces the surface of disk 2312 is referred to as an air bearing surface (ABS)) and disk surface 2322 which exerts an upward force or lift on the slider. The air bearing thus counter-balances the slight spring force of suspension 2315 and supports slider 2313 off and slightly above the disk surface by a small, substantially constant spacing during normal operation. The various components of the disk storage system are controlled in operation by control signals generated by control unit 2329, such as access control signals and internal clock signals. Typically, control unit 2329 comprises logic control circuits, storage means and a microprocessor. The control unit 2329 generates control signals to control various system operations such as drive motor control signals on line 2323 and head position and seek control signals on line 2328. The control signals on line 2328 provide the desired current profiles to optimally move and position slider 2313 to the desired data track on disk 2312. Read signals (and write signals) are communicated from (and to) read/write head 2321 by means of recording channel 2325.

## Claims

1. A method for use in forming a read sensor for a magnetic head, comprising:
prior to forming a trackwidth for the read sensor:
forming a first photoresist layer in a central region over a plurality of read sensor layers;
etching the read sensor layers such that end portions of the read sensor layers are removed and a central portion remains underneath the photoresist layer, to thereby define a stripe height for the read sensor; and
mechanically removing the first photoresist layer.

2. The method of claim 1, further comprising:
after defining the stripe height for the read sensor:
forming a second photoresist layer in a central region over the read sensor layers; and
etching the read sensor layers such that end portions of the read sensor layers are removed and a central portion remains underneath the second photoresist layer, to thereby define the trackwidth for the read sensor.

3. The method of claim 2, further comprising:
depositing hard bias and lead layers around the read sensor; and
removing the second photoresist layer through mechanical interaction with a CMP pad.

4. The method of claim 1, 2 or 3, further comprising prior to removing the photoresist layer, forming a protective layer between the read sensor layers and the photoresist layer.

5. The method of claim 1, further comprising:
prior to removing the photoresist layer, forming a protective layer over materials which surround the read sensor layers; and
wherein the materials comprise one of insulator materials and lead materials.

6. The method of claim 3, further comprising after etching the read sensor layers with use of the first photoresist layer, forming an insulator layer around the read sensor where the end portions were removed.

7. The method of claim 6, further comprising:
after etching the read sensor, layers with use of the second photoresist layer, forming hard bias and lead layers around the read sensor where the end portions were removed.

8. The method of any of the preceding claims, wherein the photoresist layer(s) is/are formed without undercuts.

9. The method of any of the preceding claims, further comprising prior to removing the first photoresist layer, forming a protective layer over the read sensor layers and surrounding materials.

10. The method of any of the preceding claims, wherein the act of mechanically removing the photoresist layer(s) is carried out through mechanical interaction with a chemical-mechanical polishing (CMP) pad.

11. The method of claim 10, wherein the act of removing the photoresist layer comprises mechanically compressing the photoresist layer with the CMP pad.
